# EUROPÄISCHE PATENTSCHRIFT

(11) **EP 3 953 029 B1**
(45) Veröffentlichungstag und Bekanntmachung des Hinweises auf die Patenterteilung: **16.11.2022**
(21) Anmeldenummer: 20716404.7
(22) Anmeldetag: 24.03.2020
(51) Int. Cl.: B01J 2/10, B01J 2/20, B65G 65/46

(54) **VERFAHREN ZUR ENTLEERUNG EINER VORRICHTUNG ZUR HERSTELLUNG VON GRANULATEN ODER EXTRUDATEN**
METHOD FOR EMPTYING A DEVICE FOR PRODUCING GRANULES OR EXTRUDATES
PROCÉDÉ PERMETTENT DE VIDER UN DISPOSITIF DE FABRICATION DE GRANULATS OU DE PRODUITS EXTRUDÉS

(30) Priorität: 10.04.2019 DE 102019205147
(43) Veröffentlichungstag der Anmeldung: 16.02.2022
(73) Patentinhaber: Glatt Gesellschaft mit beschränkter Haftung, 79589 Binzen (DE)
(72) Erfinder: ZIMMERMANN, Dirk, 79664 Wehr (DE)
(74) Vertreter: Patentanwälte Magenbauer & Kollegen Partnerschaft mbB
(86) Internationale Anmeldenummer: PCT/EP2020/058116
(87) Internationale Veröffentlichungsnummer: WO 2020/207784

(56) Entgegenhaltungen:
- CN-U- 205 517 608
- CN-U- 206 463 914
- CN-U- 207 042 430
- DE-C1- 4 442 710
- JP-A- H08 188 258
- JP-A- 2006 175 402
- US-A- 4 487 339

## Beschreibung

Die Erfindung betrifft ein Verfahren zur Entleerung einer Vorrichtung zur Herstellung von Granulaten oder Extrudaten, wobei die Vorrichtung einen Behälter mit einem Einlass für das zu behandelnde Material, mit einem Einlass für eine Flüssigkeit, mit einer Rühreinrichtung zur Herstellung eines Zwischenprodukts aus dem zu behandelnden Material und der Flüssigkeit und mit einem Auslass für das Zwischenprodukt, und einem Entleerrohr umfasst.

In industriellen Prozessen, insbesondere in der pharmazeutischen Industrie, werden sehr häufig Vorrichtungen zur Herstellung von Granulaten oder Extrudaten verwendet, um diese im Anschluss beispielsweise mittels eines Trocknungsapparates, insbesondere durch Wirbelschicht- oder Strahlschichtapparate, nachzubehandeln. Hierbei sind die Vorrichtung zur Herstellung von Granulaten oder Extrudaten mit dem Trocknungsapparat über eine Transferleitung direkt verbunden. Die Vorrichtungen müssen stets entleert werden, damit das Granulat oder Extrudat weiter behandelt werden kann.

Die Offenlegungsschrift DE 33 13 517 A1 zeigt einen Granulator mit vertikalen Rohmaterialeinlass und einem um die vertikale Achse umlaufenden Rotor. Das Material wird zunächst durch in einer Horizontalebene miteinander zusammenwirkende Messer und sodann durch weitere, in einer Vertikalebene miteinander zusammenwirkende Messer zerkleinert. Eine perforierte Platte verhindert einen vorzeitigen Austritt von Rohmaterial aus dem Bereich der ersten Messer und fertiges Granulat kann aus dem Bereich der weiteren Messer durch Öffnungen eines zylindrischen Siebes austreten. Die rotorseitigen Messer und die Öffnungen in dem zylindrischen Sieb können in verschiedenartiger Weise im Hinblick auf eine Steigerung des Durchsatzes angeordnet sein. Der Materialaustrag wird durch ein Flügelrad unterstützt, das auf einer Welle sitzt und in dem Raum zwischen dem Sieb und der Außenwand des Gehäuses umläuft. Durch die Wirkung der Zentrifugalkraft des Flügelrades werden die fertigen Granulatkörner aus dem Raum durch den Gehäuseauslass in einen Sammelbehälter gefördert.

Die Gebrauchsmusterschrift DE 20 2007 008 256 U1 offenbart einen Mischgranulator mit einem Mischbehälter und einem darin befindlichen, eine vertikal ausgerichtete Antriebswelle aufweisenden Rührwerk, bei denen der Mischbehälter an seiner Bodenseite gewölbt ausgebildet ist und in Anpassung an den gewölbten Boden gewölbt ausgebildete Mischwerkzeuge vorgesehen sind, wobei der Boden geschlossen ausgebildet ist, der Mischbehälter im Wandbereich eine Auslauföffnung aufweist, Zugabevorrichtungen für Flüssigkeit und Feststoffe in den eigentlichen Mischbehälter vorgesehen sind und innerhalb des Mischbehälters vor der Auslauföffnung eine den Austrag des Mischund Granuliergutes unterstützende Zerkleinerungs- und Fördereinrichtung vorgesehen ist, wobei der Mischbehälter an seiner Oberseite eine Abdeckung aufweist und die Zerkleinerungs- und Fördereinrichtung von einem Schutzgehäuse umgeben ist. Die Zerkleinerungs- und Fördereinrichtung bewirkt somit eine Zerkleinerung, falls noch größere Produktklumpen im Vordergrund vorhanden sein sollten, und gleichzeitig ein Zufördern des Granuliergutes zur Auslassöffnung. Die Zerkleinerungs- und Fördereinrichtung unterstützt somit die Entleerung des Mischbehälters über die seitlich an den Mischbehälter angeordnete Auslauföffnung.

Auch in der CN 206 463 914 U ist ein Granulator mit einer Entleerungsvorrichtung beschrieben. In der CN 207042 430 U, der CN 205 517 608 U, der US 4 487 339 A und der JP H08 188258 A werden Entleerungskonzepte für Schüttgutbehälter beschrieben.

Bei den Vorrichtungen gemäß dem Stand der Technik ist es allgemein üblich die Entleerung des insbesondere feuchten Granulats über eine seitlich an der Vorrichtung angeordnete Austrittsöffnung vorzunehmen. Mithilfe des sich drehenden Rührwerks und der Schwerkraft wird das hergestellte Granulat stromabwärts der Austrittsöffnung, d. h. dem Sieb nachgelagert, üblicherweise mittels der Schwerkraft oder pneumatisch in eine Trocknungsvorrichtung gefördert. Bei dieser Art der Entleerung ist der aus der Vorrichtung geförderte Massenstrom über den gesamten Entleerungsprozess hinweg nicht konstant. Üblicherweise ist zu Beginn des Entleerungsprozesses der aus der Vorrichtung geförderte Massenstrom größer als zum Ende des Entleerungsprozesses, wodurch das erzeugte Granulat in Klumpenform in das sich anschließende Sieb fällt. Hierdurch bedingt wird der Bauraum für die Entleerung großzügig dimensioniert, um ein Verstopfen der Produktionsanlage zu verhindern. Mit abnehmendem Massenstrom wird die Entleerung der Vorrichtung schlechter, da das Granulat nur noch schwierig aus der Vorrichtung bspw. durch das Rührwerk gefördert werden kann. Auch deshalb sind die Entleerzeiten in Abhängigkeit von den Produkteigenschaften durchaus sehr lang und nicht reproduzierbar, was ein weiterer Nachteil der im Stand der Technik gezeigten Vorrichtungen ist.

Aufgabe der Erfindung ist es daher ein Verfahren zur Entleerung einer Vorrichtung zur Herstellung von Granulaten oder Extrudaten bereitzustellen, das die Nachteile aus dem Stand der Technik überwindet und insbesondere genau definierbare Entleerzeiten in Abhängigkeit von den Produkteigenschaften der zu verarbeitenden Materialien ermöglicht.

Diese Aufgabe wird bei einem Verfahren der eingangs genannten Art, dadurch gelöst, dass die Vorrichtung ein einen Einlass für das Zwischenprodukt und einen Auslass für das Granulat oder Extrudat sowie eine das Zwischenprodukt vom Einlass des Entleerrohrs in Richtung des Auslasses des Entleerrohrs fördernde Fördereinrichtung aufweisendes Entleerrohr umfasst, wobei das um eine Achse drehbare Entleerrohr derart an dem Behälter angeordnet ist, sodass das Entleerrohr gegenüber dem Behälter zwischen einer Offen-Stellung und einer Schließ-Stellung verbringbar ist umfassend die Schritte
a) Herstellen des Zwischenprodukts aus dem zu behandelnden Material und der Flüssigkeit im durch das Entleerrohr verschlossenen Behälter, wobei die Rühreinrichtung zumindest zeitweise aktiv ist,
b) Verbringen des Entleerrohrs aus der Schließ-Stellung gegenüber dem Behälter in eine Offen-Stellung gegenüber dem Behälter und
c) Fördern des Zwischenprodukts aus dem Behälter und über die Fördereinrichtung des Entleerrohrs aus dem Auslass des Entleerrohrs.

Vorteilhafterweise wird es durch die erfindungsgemäße Ausgestaltung des Verfahrens ermöglicht ein Zwischenprodukt aus einem zu behandelnden Material und einer Flüssigkeit herzustellen, und das Zwischenprodukt anschließend über das sich in der Offen-Stellung befindende eine Fördereinrichtung aufweisende Entleerrohr aus der Vorrichtung zu fördern und zu granulieren oder zu extrudieren. Hierbei ist in der Offen-Stellung der Auslass des Behälters der Vorrichtung und der Einlass des Entleerrohrs der Vorrichtung zumindest teilweise deckungsgleich. Das im Behälter hergestellte Zwischenprodukt wird beim Entleervorgang durch die Rühreinrichtung und/oder die Schwerkraft in das Entleerrohr transportiert und dort durch die Fördereinrichtung mit einem einstellbaren, bevorzugt konstanten Massenstrom aus der Vorrichtung gefördert. Hierdurch bedingt sind bei der erfindungsgemäßen Vorrichtung die Entleerzeiten in Abhängigkeit von den Produkteigenschaften genau definierbar oder definiert und exakt reproduzierbar.

Weitere vorteilhafte Ausgestaltungen des bevorzugten Verfahrens sind in den Unteransprüchen dargelegt.

Nach einem diesbezüglich vorteilhaften Verfahren wird vor Schritt b) die Rühreinrichtung in eine vorbestimmte Position gebracht. Vorteilhafterweise wird hierdurch die Drehung des Entleerrohrs von der Schließ-Stellung in die Offen-Stellung vereinfacht bzw. erleichtert oder verbessert, bspw. durch Anheben der Rühreinrichtung oder Anhalten der Rühreinrichtung in einer vorbestimmten Position im Behälter. Hierbei wird vorteilhafterweise die Rühreinrichtung durch Anheben in eine vorbestimmte Position verfahren oder die Rührflügel der Rühreinrichtung werden in einem vorbestimmten Winkel im Behälter angehalten. So wird eine Beschädigung der Vorrichtung vermieden.

Nach einer vorteilhaften Fortbildung des Verfahrens wird beim Verbringen des Entleerrohrs aus der Schließ-Stellung gegenüber dem Behälter in eine Offen-Stellung gegenüber dem Behälter gemäß Schritt b) das Entleerrohr um einen Winkel von 10° bis 300°, insbesondere im Wesentlichen um einen Winkel 180°, gedreht. Bevorzugt wird beim Verbringen des Entleerrohrs aus der Schließ-Stellung gegenüber dem Behälter in eine Offen-Stellung gegenüber dem Behälter gemäß Schritt b) das Entleerrohr manuell oder automatisiert gedreht. Durch die bspw. automatisierte Drehung des Entleerrohrs kann ein besserer Automatisationsgrad erreicht werden.

Entsprechend einer zusätzlichen Ausgestaltung des erfindungsgemäßen Verfahrens umfasst die Vorrichtung einen Fluidisierungsapparat und das aus dem Auslass des Entleerrohrs gemäß Schritt c) austretende Extrudat oder Granulat wird in dem Fluidisierungsapparat behandelt, insbesondere getrocknet. Bevorzugt weist hierbei der Einlass des Fluidisierungsapparates eine Zuleitung für Fluide, insbesondere Gase, auf. Durch die Zuleitung eines Fluids, insbesondere eines Fluidisierungsgases, bevorzugt eines inerten Gases, wird der Übertritt des aus dem Auslass des Entleerrohrs austretenden Extrudats oder Granulats in den Fluidisierungsapparat, bevorzugt eine Wirbel- oder Strahlschicht, gefördert bzw. unterstützt. Besonders bevorzugt weist der Einlass, d. h. eine Einlassleitung, des Fluidisierungsapparates einen Anströmboden auf oder ist zumindest teilweise als Anströmboden ausgebildet. Durch einen so gestalteten Einlass des Fluidisierungsapparates wird das aus dem Auslass des Entleerrohrs der Vorrichtung austretende Extrudat oder Granulat direkt fluidisiert, ohne dass das Extrudat oder Granulat mit der Innenfläche des Einlasses des Fluidisierungsapparates in Berührung kommt. Somit ergibt sich eine überdies verringerte produktberührte Oberfläche und folglich ein geringerer Produktverlust.

Eine zusätzliche vorteilhafte Ausgestaltung des erfindungsgemäßen Verfahrens sieht vor, dass die Vorrichtung eine weitere Düse umfasst, wobei die Vorrichtung zumindest zeitweise während der Schließ-Stellung gereinigt wird. Hierdurch ist es möglich das Entleerrohr von Produktresten zu befreien bzw. zu reinigen, sodass das Entleerrohr bei der nächsten Entleerung des Behälters sauber ist und die neue Charge frei von Verunreinigungen oder Rückständen der vorangegangenen Charge aus der Vorrichtung transportiert bzw. gefördert werden kann. Entsprechend einer bevorzugten Ausgestaltung ist die Düse an einer Schiene angeordnet. Besonders bevorzugt ist die Schiene teleskopierbar. Hierdurch kann die Düse optimal entlang des Einlasses des Entleerrohrs der Vorrichtung positioniert werden, um jeden Winkel des Entleerrohrs optimal zu reinigen. Ganz besonders bevorzugt ist die Düse in Längs- und Querrichtung zur Düse verschiebbar anordenbar oder angeordnet. Durch die Verschiebbarkeit der Düse insbesondere in Querrichtung zum Einlass, d. h. näher an den Einlass heran, können Verunreinigungen oder Rückstände der vorangegangenen Charge verbessert entfernt und so das Entleerrohr optimal gereinigt werden.

Gemäß einer vorteilhaften Ausgestaltung des erfindungsgemäßen Verfahrens ist die Vorrichtung zur Durchführung des Verfahrens eine nachfolgend beschriebene Vorrichtung.

Die Vorrichtung zur Herstellung von Granulaten oder Extrudaten umfasst einen Behälter mit einem Einlass für das zu behandelnde Material, mit einem Einlass für eine Flüssigkeit, mit einer Rühreinrichtung zur Herstellung eines Zwischenprodukts aus dem zu behandelnden Material und der Flüssigkeit und mit einem Auslass für das Zwischenprodukt, und ein Entleerrohr, wobei die Vorrichtung ein einen Einlass für das Zwischenprodukt und einen Auslass für das Granulat oder Extrudat sowie eine das Zwischenprodukt vom Einlass des Entleerrohrs in Richtung des Auslasses des Entleerrohrs fördernde Fördereinrichtung aufweisendes Entleerrohr umfasst, wobei das um eine Achse drehbare Entleerrohr derart an dem Behälter angeordnet ist, sodass das Entleerrohr gegenüber dem Behälter zwischen einer Offen-Stellung und einer Schließ-Stellung verbringbar ist.

Vorteilhafterweise wird es durch die Ausgestaltung der Vorrichtung ermöglicht ein Zwischenprodukt aus einem zu behandelnden Material und einer Flüssigkeit herzustellen, und das Zwischenprodukt anschließend über das sich in der Offen-Stellung befindende eine Fördereinrichtung aufweisende Entleerrohr aus der Vorrichtung zu fördern und zu granulieren oder zu extrudieren.

In der Offen-Stellung ist der Auslass des Behälters der Vorrichtung und der Einlass des Entleerrohrs der Vorrichtung zumindest teilweise deckungsgleich. Eine Stellung bei der der Auslass des Behälters der Vorrichtung und der Einlass des Entleerrohrs der Vorrichtung nicht zumindest teilweise deckungsgleich sind wird entsprechend als Schließ-Stellung bezeichnet. In der Offen-Stellung ist somit das Zwischenprodukt vom Behälter über dessen Auslass und über den Einlass des Entleerrohrs in selbiges transferierbar. In der Schließ-Stellung ist ein Transfer des Zwischenproduktes vom Behälter in das Entleerrohr nicht möglich. Um das Entleerrohr von einer Schließ-Stellung in eine Offen-Stellung zu verbringen ist das Entleerrohr manuell oder automatisiert, bspw. mittels einer Antriebseinheit, insbesondere einem Torque- oder Servomotor, drehbar. Bevorzugt wird das Entleerrohr um 180° gedreht, weil hierdurch in der Schließ-Stellung eine gute Reinigung des Entleerrohrs erreicht wird.

Das im Behälter hergestellte Zwischenprodukt wird beim Entleervorgang, d. h. in einer Offen-Stellung des Entleerrohrs gegenüber dem Behälter, durch die Rühreinrichtung und/oder die Schwerkraft in das Entleerrohr transportiert. Im Entleerrohr wird das Zwischenprodukt durch die Fördereinrichtung mit einem einstellbaren Massenstrom aus der Vorrichtung gefördert. Der durch die Fördereinrichtung erzeugte Massenstrom ist bevorzugt konstant. Bedingt durch den einstellbaren Massenstrom aus dem Behälter und aus dem Entleerrohr sind bei der erfindungsgemäßen Vorrichtung die Entleerzeiten insbesondere in Abhängigkeit von den Produkteigenschaften genau definierbar oder definiert und dementsprechend exakt reproduzierbar.

Gemäß einer diesbezüglich bevorzugten Fortbildung der Vorrichtung ist der Einlass für die Flüssigkeit in Form einer Düse ausgebildet, insbesondere eine Ein- oder Mehrstoffdüse. Dies hat den Vorteil, dass die Flüssigkeit bspw. in Form eines Reinstoffs, einer Emulsion, Suspension oder Aufschlämmung exakt und genau dosiert dem im Behälter zu behandelnden Material zugegeben werden kann. Bevorzugterweise ist die Flüssigkeit eine Granulierflüssigkeit.

Entsprechend einer Weiterbildung der Vorrichtung ist das Entleerrohr unterhalb des Behälters angeordnet. Die Anordnung unterhalb des Entleerrohr sorgt für eine verbesserte Entleerung bspw. aufgrund der zusätzlichen Schwerkraftwirkung auf das hergestellte Zwischenprodukt während des Entleervorgangs.

Das unterhalb des Behälters angeordnete Entleerrohr ist in einer Schnittebene angeordnet, die parallel zu einer durch eine vertikale Mittelachse des Behälters verlaufenden Schnittebene in einem Abstand verläuft. Durch diese Anordnung des Entleerrohrs gegenüber dem Behälter ist das Zwischenprodukt besonders gut aus dem Behälter in das Entleerrohr transferierbar. Entsprechend einer speziellen Ausbildung der Vorrichtung ist der Abstand gleich null, sodass das Entleerrohr in einer Schnittebene angeordnet ist, die durch eine vertikale Mittelachse des Behälters verläuft. Bei dieser speziellen Ausbildung ist die Fläche des Auslasses des Behälters und die Fläche des Einlasses des Entleerrohrs besonders groß ausbildbar bzw. ausgebildet.

Nach einer zusätzlichen Weiterbildung der Vorrichtung weist die Rühreinrichtung Rührflügel auf, insbesondere zumindest teilweise flexibel ausgebildete Rührflügel. Die Rührflügel der Rühreinrichtung können starr und/oder zumindest teilweise flexibel ausgebildet sein. Durch eine zumindest teilweise Flexibilität der Rührflügel ist es nicht zwingend erforderlich die Rühreinrichtung beim Verbringen des Entleerrohrs von einer Schließ-Stellung in eine Offen-Stellung in eine vorbestimmte Position zu verbringen, sondern die Rühreinrichtung kann einfach im Behälter in einer beliebigen Position angehalten werden und dort verbleiben. Die Rührflügel geben gemäß dieser Weiterbildung beim Verbringen des Entleerrohrs einer Schließ-Stellung in eine Offen-Stellung aufgrund ihrer Flexibilität nach, sodass keine Beschädigung der Rührflügel der Rühreinrichtung und/oder des Entleerrohrs erfolgt.

Nach einer zusätzlichen vorteilhaften Ausgestaltung der Vorrichtung ist oder wird die Fördereinrichtung durch eine Welle antreibbar oder angetrieben. Hierdurch ist es möglich die Fördereinrichtung bspw. mittels einer mit der Welle bspw. über ein Getriebe gekoppelten Antriebseinheit, insbesondere einem Servo- oder Torquemotor, anzutreiben, sodass die Winkelgeschwindigkeit der Fördereinrichtung exakt einstellbar ist. Bevorzugt ist die die Fördereinrichtung antreibende Welle eine Hohlwelle.

Nach einer weiteren vorteilhaften Fortbildung der Vorrichtung ist die Fördereinrichtung eine Förderschnecke, ein Spiralförderer oder dgl.. Bevorzugt weist die Fördereinrichtung Zonen aufweist, wobei die Gangtiefe der Fördereinrichtung in den Zonen unterschiedlich ist. Hierdurch ist es möglich das geförderte Zwischenprodukt auf dem Weg Richtung Auslass des Entleerrohrs unterschiedlich stark zu komprimieren und ggf. durch den Auslass des Entleerrohrs zu drücken.

Vorteilhafterweise ist der Auslass des Entleerrohrs als Siebeinrichtung ausgebildet. Hierdurch ist es möglich das Granulat oder Extrudat beim Fördern aus dem Entleerrohr direkt am Auslass des Entleerrohrs herzustellen. Bevorzugt umfasst die Siebeinrichtung ein Sieb und einen Rotor. Durch den Rotor wird das aus dem Entleerrohr geförderte Zwischenprodukt am Sieb der Siebeinrichtung abgeschert bzw. abgestreift, sodass Granulate oder Extrudate aus dem Sieb der Siebeinrichtung fallen. Besonders bevorzugt ist die Siebeinrichtung kegelförmig ausgebildet. Ganz besonders bevorzugt sind die Öffnungen des Siebs der Siebeinrichtung rund, oval, rechteckig und/oder quadratisch ausgebildet. Der Rotor ist bevorzugt nach Art eines Ankers ausgebildet und an die Innenfläche des Siebs der Siebeinrichtung angepasst.

In einer ganz besonders bevorzugten Weiterbildung der erfindungsgemäßen Vorrichtung sind die Fördereinrichtung und der Rotor einstückig als Bauteileinheit des Entleerrohrs ausgebildet. Die Bauteileinhiet ist oder wird dann durch eine gemeinsame Welle antreibbar oder angetrieben. Hierdurch weist die Vorrichtung weniger Bauteile auf und ist daher kostengünstiger herstellbar. Zudem wird die Konstruktion der erfindungsgemäßen Vorrichtung durch eine Fördereinrichtung und Rotor aufweisende einstückige Bauteileinheit konstruktiv einfacher.

Gemäß einer zusätzlichen vorteilhaften Weiterbildung der Vorrichtung ist oder wird der Rotor durch eine Welle antreibbar oder angetrieben. Bevorzugt ist oder wird die den Rotor antreibende Welle unabhängig von der die Fördereinrichtung antreibenden Welle antreibbar oder angetrieben. Ganz besonders bevorzugt ist die den Rotor antreibende Welle koaxial zur die Fördereinrichtung antreibenden Welle ausgebildet. Am meisten bevorzugt ist die den Rotor antreibende Welle in der die Fördereinrichtung antreibenden Hohlwelle angeordnet.

Nach einer zusätzlichen Ausgestaltung der Vorrichtung umfasst die Vorrichtung einen einen Einlass für das Extrudat oder Granulat aufweisenden Trocknungsapparat, wobei der Auslass des Entleerrohrs mit einem Einlass des Trocknungsapparat verbindbar ist oder verbunden ist. Durch die direkte Kopplung zwischen Auslass des Entleerrohrs der Vorrichtung und dem Einlass des Trocknungsapparates entfällt das Transferrohr für den Transport der feuchten Granulate oder Extrudate in den Trocknungsapparat vollständig. Hierdurch ergibt sich eine deutlich verringerte produktberührte Oberfläche und folglich ein geringerer Produktverlust im Vergleich zu einer herkömmlichen Granulationslinie, d. h. Granulator, Transferrohr und Trocknungsapparat. Der Auslass des Entleerrohrs kann zudem in die Wirbelschicht des Trocknungsapparates hineinragen. Hierdurch wird die produktberührte Oberfläche beim Transport der noch feuchten Granulate von der Granulationseinheit in den Fluidisierungsapparat weiter verringert.

Bevorzugt weist hierbei der Einlass des Trocknungsapparates eine Zuleitung für Fluide, insbesondere Gase, auf. Durch die Zuleitung eines Fluids, insbesondere eines Fluidisierungsgases, bevorzugt eines inerten Gases, wird der Übertritt des aus dem Auslass des Entleerrohrs austretenden Extrudats oder Granulats in den Trocknungsapparat, bevorzugt eine Wirbeloder Strahlschicht, gefördert bzw. unterstützt und die Extrudate oder Granulate zumindest teilweise fluidisiert. Besonders bevorzugt weist der Einlass des Trocknungsapparates einen Anströmboden auf oder ist zumindest teilweise als Anströmboden ausgebildet. Ein Anströmboden ist bspw. in Form einer perforierten Platte ausgebildet, so dass ein Fluidisierungsmedium durch den Anströmboden durchtreten kann und die Granulate oder Extrudate fluidisiert, ähnlich einem Fluidisierungsapparat. Durch einen so gestalteten Einlass des Trocknungsapparates wird das aus dem Auslass des Entleerrohrs der Vorrichtung austretende Extrudat oder Granulat direkt fluidisiert, ohne dass das Extrudat oder Granulat mit der Innenfläche des Einlasses des Trocknungsapparates in Berührung kommt. Somit ergibt sich eine überdies verringerte produktberührte Oberfläche und folglich ein geringerer Produktverlust.

Nach einer zusätzlichen vorteilhaften Ausgestaltung der Vorrichtung umfasst die Vorrichtung eine weitere Düse zur Reinigung des Entleerrohrs in der Schließ-Stellung des Entleerrohrs. Hierdurch ist es möglich das Entleerrohr von Produktresten zu befreien bzw. zu reinigen, sodass das Entleerrohr bei der nächsten Entleerung des Behälters sauber ist und die neue Charge frei von Verunreinigungen oder Rückständen der vorangegangenen Charge aus der Vorrichtung transportiert bzw. gefördert werden kann. Entsprechend einer bevorzugten Ausgestaltung ist die Düse an einer Schiene angeordnet. Besonders bevorzugt ist die Schiene teleskopierbar. Hierdurch kann die Düse optimal entlang des Einlasses des Entleerrohrs der Vorrichtung positioniert werden, um jeden Winkel des Entleerrohrs optimal zu reinigen. Ganz besonders bevorzugt ist die Düse in Längs- und Querrichtung zur Düse verschiebbar anordenbar oder angeordnet. Durch die Verschiebbarkeit der Düse insbesondere in Querrichtung zum Einlass, d. h. näher an den Einlass heran, können Verunreinigungen oder Rückstände der vorangegangenen Charge verbessert entfernt und so das Entleerrohr optimal gereinigt werden.

Bevorzugt wird das Verfahren mit der vorgenannten Vorrichtung durchgeführt.

Nachfolgend wird die Erfindung anhand der beiliegenden Zeichnung näher erläutert. Es zeigen
- Figur 1: eine Draufsicht auf ein Ausführungsbeispiel einer bevorzugten Vorrichtung mit einem in einer Schnittebene A-A angeordnetem Entleerrohr, wobei sich das Entleerrohr in einer Schließ-Stellung befindet,
- Figur 2: einen Schnitt der bevorzugten Vorrichtung gemäß Schnittebene A-A in Figur 1 mit einem Ausschnitt B im Bereich eines Auslasses des Entleerrohrs, wobei sich das Entleerrohr in einer Schließ-Stellung befindet,
- Figur 3: eine Detailansicht im Bereich des Auslasses des Entleerrohrs gemäß Ausschnitt B in Figur 2, wobei sich das Entleerrohr in einer Schließ-Stellung befindet,
- Figur 4: eine Draufsicht auf ein Ausführungsbeispiel einer bevorzugten Vorrichtung mit einem in einer Schnittebene A-A angeordnetem Entleerrohr, wobei sich das Entleerrohr in einer Offen-Stellung befindet, und in einen Einlass des Fluidisierungsapparates mündet,
- Figur 5: einen Schnitt der bevorzugten Vorrichtung gemäß Schnittebene A-A in Figur 4 mit einem Ausschnitt C im Bereich des Auslasses des Entleerrohrs, wobei sich das Entleerrohr in einer Offen-Stellung befindet, und in einen Einlass des Fluidisierungsapparates mündet,
- Figur 6: eine Detailansicht im Bereich eines Auslasses des Entleerrohrs gemäß Ausschnitt C in Figur 5, wobei sich das Entleerrohr in einer Offen-Stellung befindet, und in einen Einlass des Fluidisierungsapparates mündet,
- Figur 7: eine perspektivische Darstellung einer ersten Ausführungsform des Entleerrohrs,
- Figur 8: eine perspektivische Darstellung einer zweiten Ausführungsform des Entleerrohrs und
- Figur 9: eine perspektivische Darstellung einer dritten Ausführungsform des Entleerrohrs.

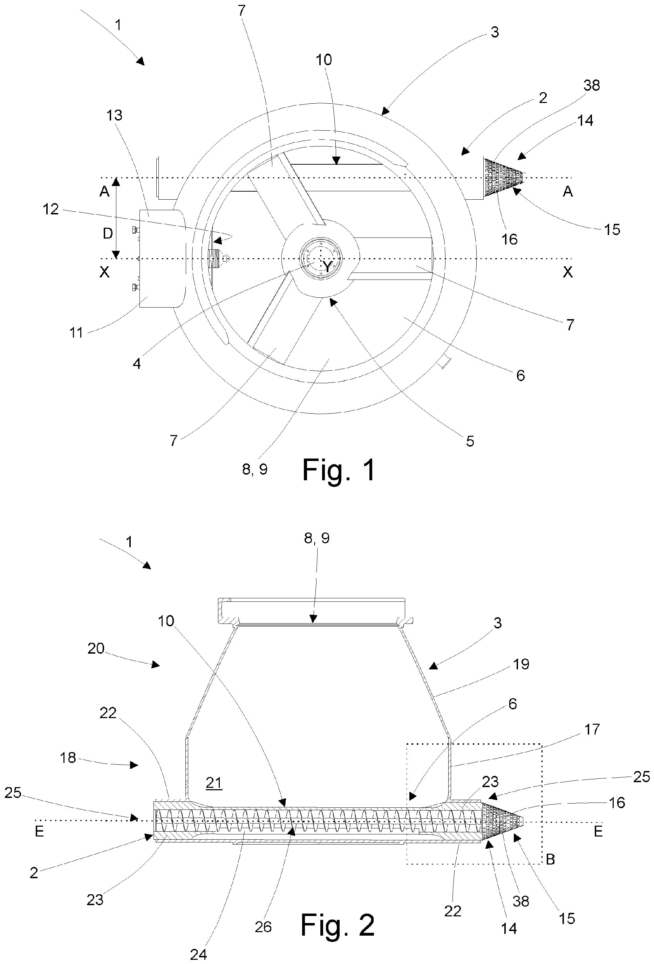

In Fig. 1 wird eine Draufsicht auf ein Ausführungsbeispiel einer bevorzugten Vorrichtung 1 mit einem in einer Schnittebene A-A angeordneten Entleerrohr 2, wobei sich das Entleerrohr 2 in einer Schließ-Stellung befindet.

Die im Ausführungsbeispiel dargestellte Vorrichtung 1 ist als Vertikal-Granulator ausgebildet, wobei andere Granuliererbauarten ebenso möglich sind. Die Vorrichtung 1 umfasst einen Behälter 3, wobei im Behälter 3 auf einer Antriebswelle 4 eine Rühreinrichtung 5 angeordnet ist. Die Antriebswelle 4 im Behälter 3 ist an einer vertikal ausgerichteten Achse Y bevorzugt teleskopierbar ausgestaltet. Hierdurch ist die Rühreinrichtung 5 in Bezug auf den Boden 6 des Behälters 3 höhenverstellbar ausgebildet. Hierdurch ist es möglich einen Abstand der Rühreinrichtung 5 zum Boden 6 des Behälters 3 zu variieren und die Rühreinrichtung 5 anzuheben bzw. abzusenken.

Die Rühreinrichtung 5 weist im Ausführungsbeispiel drei Rührflügel 7 auf, ist aber nicht auf diese Anzahl an Rührflügeln 7 festgelegt. Die die Rühreinrichtung 5 tragende Antriebswelle 4 wird von einer in Fig. 1 nicht dargestellten Antriebseinheit, vorzugsweise einem Motor, besonders bevorzugt einem Elektromotor, ganz besonders bevorzugt einem Servo- oder Torquemotor, angetrieben. Durch eine derartige Ausgestaltung ist es möglich die Rühreinrichtung 5 mit seinen Rührflügeln 7 über eine nicht gezeigte mit dem Motor verbundene Kontrolleinheit in jeder beliebigen Stellung der Rührflügel 7 im Behälter 3 anzuhalten und somit die Rühreinrichtung 5 mit seinen Rührflügeln 7 präzise, bspw. in einer vorbestimmten Stellung, zu positionieren. Zudem ist auch ein Anheben oder Absenken der Rührflügel 7 aufweisenden Rühreinrichtung 5 durch die bevorzugt teleskopierbar ausgebildete Antriebswelle 4 möglich.

Der Behälter 3 weist einen Einlass 8 für ein zu behandelndes Material und einen Einlass 9 für eine Flüssigkeit auf, insbesondere für eine Granulierflüssigkeit. Bevorzugt und anders als in Fig. 1 dargestellt ist der Einlass 9 für eine Flüssigkeit in Form einer Düse, insbesondere einer Ein- oder Mehrstoffdüse, ausgestaltet. Dies hat den Vorteil, dass die Flüssigkeit bspw. in Form eines Reinstoffs, einer Emulsion, Suspension oder Aufschlämmung exakt und genau dosiert dem im Behälter 3 zu behandelnden Material zugegeben werden kann. Bevorzugterweise ist die Flüssigkeit eine Granulierflüssigkeit. Im Ausführungsbeispiel entspricht der Einlass 8 für das zu behandelnde Material dem Einlass 9 für die Flüssigkeit.

Im Behälter 3 wird mittels der Rühreinrichtung 3 das zu behandelnde Material mit der Flüssigkeit vermischt und zu einem Zwischenprodukt verarbeitet. Der Behälter 3 weist dementsprechend einen Auslass 10 für das im Behälter 3 aus dem zu behandelnden Material und der Flüssigkeit hergestellten Zwischenprodukt auf. Hier ist der Auslass 10 im Boden 6 des Behälters 3 angeordnet. Im Ausführungsbeispiel weist der Behälter 3 bspw. zur Zerkleinerung und Homogenisierung des Zwischenprodukts zusätzlich einen durch eine Antriebseinheit 11 angetriebenen Zerhacker 12 auf. Zudem weist die Vorrichtung 1 eine Steuereinheit 13 auf, die die gesamte Vorrichtung 1 und deren Prozessabläufe steuert.

Unterhalb des Behälters 3 ist im in Fig. 1 gezeigten Ausführungsbeispiel ein Entleerrohr 2 angeordnet. Das sich in Fig. 1 in einer Schließ-Stellung befindende Entleerrohr 2 ist in einer Schnittebene A-A angeordnet. Das unterhalb des Behälters 3 angeordnete Entleerrohr 2 ist in einer Schnittebene A-A angeordnet, die parallel zu einer durch eine vertikale Mittelachse Y des Behälters 3 verlaufenden Schnittebene X-X in einem Abstand D verläuft.

Ein Auslass 14 des Entleerrohrs 2 ist im Ausführungsbeispiel der Fig. 1 als Siebeinrichtung 15 ausgebildet. Hierdurch ist es möglich das Granulat oder Extrudat beim Fördern aus dem Entleerrohr 2 direkt am Auslass 14 des Entleerrohrs 2 herzustellen. Bevorzugt umfasst die Siebeinrichtung 15 ein Sieb 38 und einen hier nicht gezeigten Rotor. Durch diesen Rotor wird das aus dem Entleerrohr 2 geförderte Zwischenprodukt am Sieb 38 des als Siebeinrichtung 15 ausgebildeten Auslass 14 abgeschert bzw. abgestreift, sodass Granulate aus dem Sieb 38 der Siebeinrichtung 15 fallen. Die Siebeinrichtung 15 ist im Ausführungsbeispiel kegelförmig ausgebildet und weist quadratische Öffnungen 16 auf. Die Öffnungen 16 des Siebs 38 der Siebeinrichtung 15 können auch rund, oval rechteckig und/oder quadratisch ausgebildet sein. Der nicht dargestellte Rotor ist bevorzugt nach Art eines Ankers ausgebildet und an die Innenfläche 33 des Siebs 38 des als Siebeinrichtung 15 ausgebildeten Auslasses 14 angepasst.

Einen Schnitt der bevorzugten Vorrichtung 1 gemäß Schnittebene A-A in Fig. 1 mit einem Ausschnitt B im Bereich des Auslasses 14 des Entleerrohrs 2, wobei sich das Entleerrohr 2 in einer Schließ-Stellung befindet, ist in Fig. 2 gezeigt.

Der Behälter 3 unterhalb dessen das Entleerrohr 2 angeordnet ist, weist im Ausführungsbeispiel einen Behälterwände 17 umfassenden unteren kreisförmigen Behälterteil 18 und einen Behälterwände 19 umfassenden oberen konischen Behälterteil 20 auf. Der untere und der obere Behälterteil 19, 20 umschließen gemeinsam mit dem Boden 6 des Behälters 3 einen Behälterinnenraum 21.

Der Einlass 8 für das zu behandelnde Material und der Einlass 9 für die Flüssigkeit sind im Ausführungsbeispiel im oberen Bereich des konischen Behälterteils 20 angeordnet.

Unterhalb des Behälters 3 ist am Boden 6 des Behälters 3 ein Entleerrohr 2 angeordnet. Das Entleerrohr ist hierbei in einer Wandung 22 des Bodens 6 des Behälters 3 drehbar angeordnet, wobei das Entleerrohr 2 von einer Schließ-Stellung in eine Offen-Stellung verbringbar ist. In Fig. 2 befindet sich das Entleerrohr 2 in Schließ-Stellung. Das Entleerrohr 2 weist eine Wandung 23 auf. Die Wandung 23 umfasst einen Einlass 24 für das Entleerrohr 2. Der Einlass 24 hat bevorzugt die Abmaße des Auslasses 10 des Behälters 3. Des Weiteren weist das Entleerrohr 2 an einer seiner beiden Stirnseiten 25 den als Siebeinrichtung 15 ausgebildeten Auslass 14 auf. Im Auslass 14 ist ein in Fig. 2 nicht dargestellter, an die Innenwandung des Siebs 38 der Siebeinrichtung 15 angepasster Rotor angeordnet.

Das Entleerrohr 2 der Vorrichtung 1 weist eine Fördereinrichtung 26 auf, die insbesondere als Förderschnecke, Spiralförderer oder dgl. ausgebildet ist und in Längsrichtung des Entleerrohrs 2 entlang der Mittelachse E-E in Richtung Auslass 14 fördert. Im in Fig. 2 dargestellten Ausführungsbeispiel weist die als Förderschnecke ausgebildete Fördereinrichtung 26 eine Zone mit konstanter Gangtiefe auf. Bevorzugt weist die Fördereinrichtung 26 jedoch verschiedene Zonen auf, wobei vorzugsweise die Gangtiefe der Fördereinrichtung 26 in den verschiedenen Zonen unterschiedlich ist. Die Fördereinrichtung 26 wird durch eine auf einer Mittelachse E-E des Entleerrohrs 2 angeordnete Welle 27 angetrieben. Hierdurch ist es möglich die Fördereinrichtung 26 bspw. mittels einer mit der Welle 27 bspw. über eine hier nicht gezeigte bspw. mit einem Getriebe gekoppelten Antriebseinheit, insbesondere einem Servo- oder Torquemotor, anzutreiben, sodass die Drehzahl bzw. insbesondere die Winkelgeschwindigkeit der Fördereinrichtung 26 exakt einstellbar ist. Bevorzugt ist die die Fördereinrichtung 26 antreibende Welle 27 eine Hohlwelle. Hierbei würde in der als Hohlwelle ausgebildeten Welle 27 bevorzugt eine weitere nicht gezeigte Welle einen hier nicht gezeigten Rotor antreiben. Dadurch ist es möglich den nicht dargestellten Rotor auch gegenläufig zur Welle 27 mittels einer ebenfalls nicht gezeigten Antriebseinheit zu drehen.

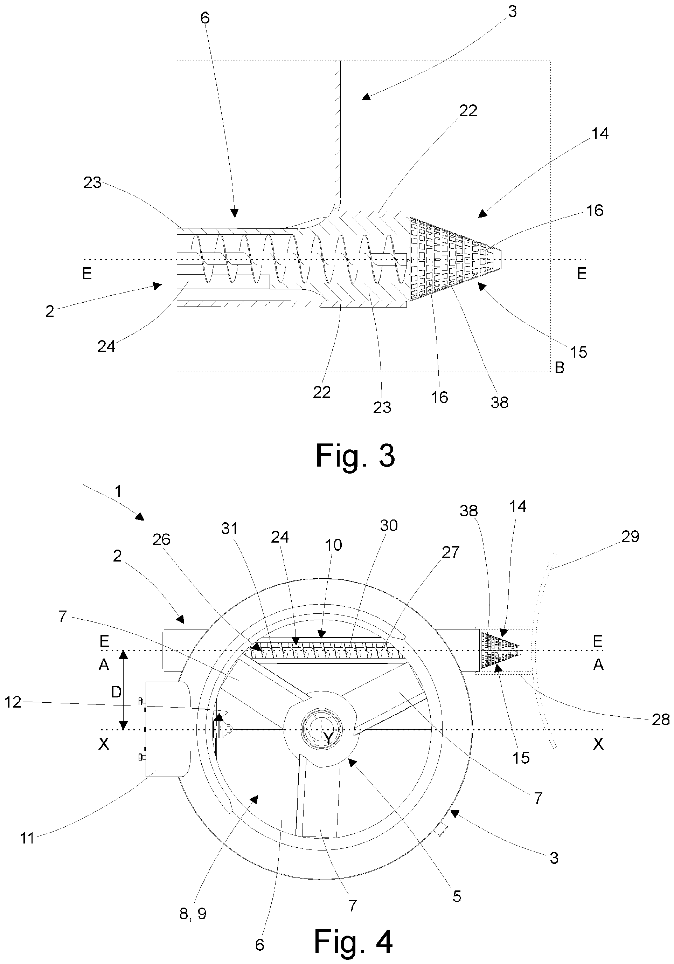

Fig. 3 zeigt eine Detailansicht im Bereich des Auslasses 14 des Entleerrohrs 2 gemäß Ausschnitt B in Fig. 2, wobei sich das Entleerrohr 2 in einer Schließ-Stellung befindet. In der Schließ-Stellung ist das Zwischenprodukt nicht vom Behälter 3 in das Entleerrohr 2 transferierbar. Das Entleerrohr 2 befindet sich in einer Schließ-Stellung, sodass das Zwischenprodukt im Behälter 3 aus dem zu behandelnden Material und der Flüssigkeit hergestellt werden kann. Die Wandung 23 des Entleerrohrs 2 bildet in der Schließ-Stellung den Boden 6 des Behälters 3 zumindest teilweise aus, sodass in der Schließ-Stellung das Zwischenprodukt nicht vom Behälter 3 in das Entleerrohr 2 transferierbar ist. Im Ausführungsbeispiel ist der Einlass 24 des Entleerrohrs 2 auf der vom Boden 6 des Behälters 3 abgewandten Seite angeordnet. Den Auslass 14 des Entleerrohrs 2 bildet die Siebeinrichtung 15, wobei innerhalb des Siebs 38 der Siebeinrichtung 15 ein nicht gezeigter Rotor angeordnet ist. Das Sieb 38 der Siebeinrichtung 15 weist Öffnungen 16 für den Austrag des Zwischenprodukts als Granulat oder Extrudat aus dem als Siebeinrichtung15 ausgebildeten Auslass 14 des Entleerrohrs 2 auf.

Das Entleerrohr 2 ist in einer dafür vorgesehenen Wandung 22 angeordnet, die einen Teil des Behälters 3, insbesondere des Bodens 6, ausbildet. Andere Arten der Anordnung des Entleerrohrs 2 am Behälter 3 sind denkbar.

Fig. 4 zeigt eine Draufsicht auf ein Ausführungsbeispiel einer bevorzugten Vorrichtung 1 mit einem in einer Schnittebene A-A angeordnetem Entleerrohr 2, wobei sich das Entleerrohr 2 in einer Offen-Stellung befindet, und in einen gestrichelt dargestellten Einlass 28 eines ebenfalls gestrichelt dargestellten Trocknungsapparates 29, bevorzugt einen Fluidisierungsapparat, besonders bevorzugt einen Wirbel- oder Strahlschichtapparat, mündet.

Im Behälter 3 wird mittels der Rührflügel 7 aufweisenden Rühreinrichtung 5 das über den Einlass 8 dem Behälter 3 zugeführte, zu behandelnde Material mit der über den Einlass 9 dem Behälter 3 zugeführten Flüssigkeit vermischt und zu einem Zwischenprodukt verarbeitet. Zusätzlich weißt der Behälter 3 im Ausführungsbeispiel einen durch eine Antriebseinheit 11 angetriebenen Zerhacker 12 bspw. zur Zerkleinerung und Homogenisierung des Zwischenprodukts auf. Der Behälter 3 weist einen Auslass 10 für das im Behälter 3 aus dem zu behandelnden Material und der Flüssigkeit hergestellte Zwischenprodukt auf. Der Auslass 10 ist im Boden 6 des Behälters 3 angeordnet.

Unterhalb des Behälters 3 ist im in Fig. 1 gezeigten Ausführungsbeispiel ein Entleerrohr 2 angeordnet. Das sich in Fig. 1 in einer Offen-Stellung befindende Entleerrohr 2 ist in einer Schnittebene A-A angeordnet. Das unterhalb des Behälters 3 angeordnete Entleerrohr 2 ist in einer Schnittebene A-A angeordnet, die parallel zu einer durch eine vertikale Mittelachse Y des Behälters 3 verlaufenden Schnittebene X-X in einem Abstand D verläuft. Der im Ausführungsbeispiel als das Sieb 38 aufweisende Siebeinrichtung 15 ausgebildete Auslass 14 des Entleerrohrs 2 mündet in einen gestrichelt dargestellten Einlass 28 eines ebenfalls gestrichelt dargestellten Trocknungsapparates 29. Als Trocknungsapparat 29 ist ein Fluidisierungsapparat, beispielsweise ein Wirbel-, oder Strahlschichtapparat, denkbar.

Im Gegensatz zu der in Fig. 1 dargestellten, baugleichen Vorrichtung 1 ist das Entleerrohr 2 in Fig. 4 in einer Offen-Stellung. In der Offen-Stellung ist das hergestellte Zwischenprodukt vom Behälter 3 in das Entleerrohr 2 transferierbar. In der Offen-Stellung ist der Auslass 10 des Behälters 3 der Vorrichtung 1 und der Einlass 24 des Entleerrohrs 2 der Vorrichtung 1 zumindest teilweise deckungsgleich. Im Ausführungsbeispiel weist der Einlass 24 des Entleerrohrs 2 eine dem Auslass 10 des Behälters 3 entsprechende Einlassfläche 30 auf. Die Einlassfläche 30 des Einlasses 24 sowie eine Auslassfläche 31 des Auslasses 10 muss zumindest so ausgebildet sein, dass in einer Offen-Stellung des Entleerrohrs 2 gegenüber dem Behälter 3 das im Behälter 3 hergestellte Zwischenprodukt über die Auslassfläche 31 des Auslasses 10 des Behälters 3 und über die Einlassfläche 30 des Einlasses 24 in das Entleerrohr 2 transferierbar ist.

Bevorzugt weist die Rühreinrichtung 5 flexibel ausgebildete Rührflügel 7 auf. Die Rührflügel 7 der Rühreinrichtung 5 können auch starr und/oder zumindest teilweise flexibel ausgebildet sein. Durch eine zumindest teilweise Flexibilität der Rührflügel 7 der Rühreinrichtung 5 ist es nicht zwingend erforderlich die Rühreinrichtung 5 beim Verbringen des Entleerrohrs 2 von einer Schließ-Stellung in eine Offen-Stellung in eine vorbestimmte Position zu verbringen, sondern die Rühreinrichtung 5 kann einfach im Behälter 3 in einer beliebigen Position angehalten werden und dort verbleiben. Die zumindest teilweise flexiblen Rührflügel 7 geben dann beim Verbringen des Entleerrohrs 2 aus einer Schließ-Stellung in eine Offen-Stellung aufgrund ihrer Flexibilität nach, sodass keine Beschädigung der Rührflügel 7 der Rühreinrichtung 5 und/oder des Entleerrohrs 2 erfolgt.

Das mittels der Rührflügel 7 aufweisenden Rühreinrichtung 5 bzw. der Schwerkraft in das Entleerrohr 2 transferierte Zwischenprodukt wird im Entleerrohr 2 anschließend mittels der Fördereinrichtung 26, die insbesondere als Förderschnecke, Spiralförderer oder dgl. ausgebildet ist, in Längsrichtung des Entleerrohrs 2 entlang der in der Schnittebene A-A liegenden Mittelachse E-E gefördert. Die Fördereinrichtung 26 wird hierbei durch eine auf einer Mittelachse E-E des Entleerrohrs 2 angeordneten Welle 27 angetrieben. Hierdurch ist es möglich die Fördereinrichtung 26 bspw. mittels einer mit der Welle 27 bspw. über eine hier nicht gezeigte, bevorzugt mit einem Getriebe gekoppelten Antriebseinheit, insbesondere einem Servo- oder Torquemotor, anzutreiben, sodass die Drehzahl und insbesondere die Winkelgeschwindigkeit der Fördereinrichtung 26 exakt einstellbar ist.

Das im Behälter 3 hergestellte Zwischenprodukt wird beim Entleervorgang, d. h. in einer Offen-Stellung des Entleerrohrs 2 gegenüber dem Behälter 3, durch die Rühreinrichtung 5 und/oder die Schwerkraft in das Entleerrohr 2 transportiert. Im Entleerrohr 2 wird das Zwischenprodukt durch die Fördereinrichtung 26 mit einem einstellbaren Massenstrom aus der Vorrichtung 1 gefördert. Der durch die Fördereinrichtung 26 erzeugte Massenstrom ist bevorzugt konstant. Bedingt durch den einstellbaren Massenstrom sind bei der Vorrichtung 1 die Entleerzeiten insbesondere in Abhängigkeit von den Produkteigenschaften genau definierbar oder definiert und dementsprechend exakt reproduzierbar.

Die die Fördereinrichtung 26 antreibende Welle 27 ist vorzugsweise als Hohlwelle ausgebildet, sodass ein hier nicht gezeigter Rotor mittels einer koaxialen Welle in der als Hohlwelle ausgebildeten Welle 27 antreibbar ist. Dadurch ist es möglich den nicht dargestellten Rotor mit einer genau einstellbaren Drehzahl mit oder entgegen der Drehrichtung der Welle 27 mittels einer ebenfalls nicht gezeigten separaten Antriebseinheit zu drehen. Sowohl die Drehzahl der Welle 27 als auch die Drehzahl der koaxialen Welle für den nicht dargestellten Rotor sind unabhängig voneinander einstell- und regelbar.

Das im Entleerrohr 2 in Richtung Auslass 13 kontrolliert geförderte Zwischenprodukt tritt aus dem Auslass 14 über die Öffnungen 16 des Siebs 38 der Siebeinrichtung 15 in den gestrichelt dargestellten Einlass 28 des Trocknungsapparates 29 als Granulat oder Extrudat aus. Der nicht dargestellte Rotor schert das Granulat oder Extrudat an den Öffnungen 16 des Siebs 38 der Siebeinrichtung 15 ab, sodass entsprechend der Drehzahl des nicht dargestellten Rotors die Partikelgröße der Granulate oder Extrudate gezielt einstellbar ist. Die Granulate oder Extrudate werden anschließend im gestrichelt dargestellten Trocknungsapparat 29 weiter behandelt, bspw. getrocknet, beschichtet oder dgl.. Die Granulate und Extrudate können schon im Einlass 28 des Trocknungsapparates 29 fluidisiert werden, um einen Transfer in den Trocknungsapparat 29 zu erleichtern.

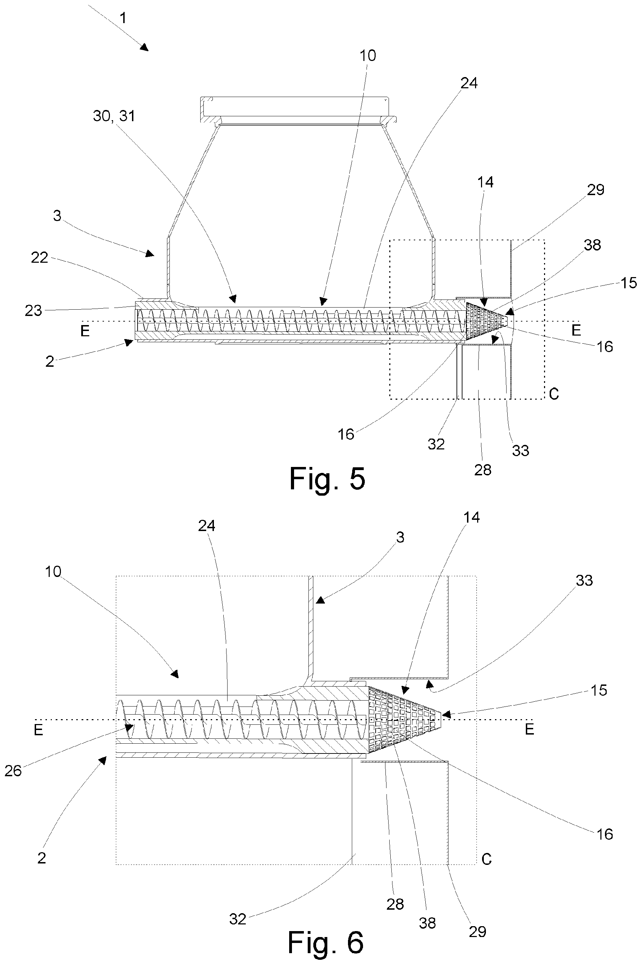

In Fig. 5 wird ein Schnitt der bevorzugten Vorrichtung 1 gemäß Schnittebene A-A in Fig. 4 mit einem Ausschnitt C im Bereich des Auslasses 14 des Entleerrohrs 2 gezeigt, wobei sich das Entleerrohr 2 in einer Offen-Stellung befindet, und in einen Einlass 28 des Trocknungsapparates 29 mündet.

Das Entleerrohr 2 ist in einer einen Teil des Behälters 3 ausbildenden Wandung 22 angeordnet. Im Gegensatz zu den Fign. 1 bis 3 befindet sich das in Fig. 5 gezeigte Entleerrohr 2 nicht in der Schließ-Stellung, sondern in der Offen-Stellung. Der Einlass 24 des Entleerrohrs 2 mit seiner Einlassfläche 30 zeigt in Richtung Behälter 3, sodass das im Behälterinnenraum 21 des Behälters 3 aus zugeführtem Material und zugeführter Flüssigkeit hergestellte Zwischenprodukt über den eine Auslassfläche 31 aufweisenden Auslass 10 vom Behälter 3 über den Einlass 24 des Entleerrohrs 2 in das Entleerrohr 2 transferierbar ist.

Das Entleerrohr 2 der Vorrichtung 1 weist eine Fördereinrichtung 26 auf. Die Fördereinrichtung 26 ist im Ausführungsbeispiel als Förderschnecke mit konstanter Gangtiefe ausgebildet. Die Fördereinrichtung 26 wird durch eine auf einer Mittelachse E-E des Entleerrohrs angeordneten Welle 27 angetrieben. Die Fördereinrichtung 26 wird mittels der Welle 27 über eine hier nicht gezeigte Antriebseinheit, insbesondere einem Servo- oder Torquemotor, angetrieben. Hierdurch ist die Drehzahl und insbesondere die Winkelgeschwindigkeit der Fördereinrichtung 26 exakt einstellbar. Die Fördereinrichtung 26 fördert das vom Behälter 3 in das Entleerrohr 2 transferierte Zwischenprodukt in Richtung Auslass 14 des Entleerrohrs 2.

Am Auslass 14 wird das Zwischenprodukt als Granulat oder Extrudat aus den Öffnungen 16 des Siebs 38 der Siebeinrichtung 15 in den Einlass 28 des Trocknungsapparates 29 befördert. Die in den Einlass 28 des Trocknungsapparates 29 fallenden Granulate oder Extrudate können im Einlass 28 des Trocknungsapparates 29 fluidisiert werden. Hierzu weist der Einlass 28 eine Zuleitung 32 auf, über die ein Fluidisierungsmedium, insbesondere ein Gas wie bspw. Luft, zuführbar ist. Durch das über die Zuleitung 32 zuführbare Fluidisierungsmedium wird ein Transfer vom Austritt aus dem Sieb 38 der Siebeinrichtung 15 des Entleerrohrs 2 in den Trocknungsapparat 29, bevorzugt ein Wirbel- oder Strahlschichtapparat, gefördert bzw. unterstützt, sodass eine Transferleitung von der Vorrichtung 1 zum Trocknungsapparat 29 zumindest nahezu vollständig entfällt. Besonders bevorzugt weist der Einlass 28 des Trocknungsapparates 29 einen Anströmboden auf oder ist zumindest teilweise als Anströmboden ausgebildet. Ein Anströmboden ist bspw. in Form einer perforierten Platte ausgebildet, so dass ein Fluidisierungsmedium durch den Anströmboden durchtreten kann und die Granulate oder Extrudate fluidisiert, ähnlich einem Fluidisierungsapparat. Diese beschriebene Ausführungsform ist nicht dargestellt. Durch einen so gestalteten Einlass 28 des Trocknungsapparates 29 wird das aus dem Auslass 14 des Entleerrohrs 2 der Vorrichtung 1 austretende Extrudat oder Granulat direkt fluidisiert, ohne dass das Extrudat oder Granulat mit der Innenfläche 33 des Einlasses 28 des Trocknungsapparates 29 in Berührung kommt. Hierdurch ergibt sich eine deutlich verringerte produktberührten Oberfläche und folglich ein geringerer Produktverlust im Vergleich zu einer über eine Transferleitung mit einem Trocknungsapparat 29 verbundenen Vorrichtung 1.

Fig. 6 zeigt eine Detailansicht im Bereich eines Auslasses 14 des Entleerrohrs 2 gemäß Ausschnitt C in Fig. 5, wobei sich das Entleerrohr 2 in einer Offen-Stellung befindet und in einen Einlass 28 des Trocknungsapparates 29 mündet.

Das im Behälter 3 hergestellte Zwischenprodukt wird über den die Auslassfläche 31 aufweisenden Auslass 10 des Behälters 3 und den die Einlassfläche 30 aufweisenden Einlass 24 des Entleerrohrs 2 in der Offen-Stellung mittels der Rührflügel 7 aufweisenden Rühreinrichtung 5 in das Entleerrohr 2 gefördert. Im Entleerrohr 2 wird das Zwischenprodukt mittels der Fördereinrichtung 26 in Richtung Auslass 14 des Entleerrohrs 2 und anschließend durch Öffnungen 16 des Siebs 38 des als Siebeinrichtung 15 ausgebildeten Auslasses 14 gefördert, sodass Granulate oder Extrudate entstehen. Besonders bevorzugt wird das Zwischenprodukt vor dem Durchtritt durch die Öffnungen 16 des Siebes 38 der Siebeinrichtung 15 von einem hier nicht dargestellten Rotor abgeschert. Die so hergestellten Granulate oder Extrudate fallen in den Einlass 28 des Trocknungsapparates 29 und werden im Trocknungsapparat 29, insbesondere einem Fluidisierungsapparat, weiter behandelt. Für einen verbesserten Transfer in den Trocknungsapparat 29 weist der eine Innenfläche 33 aufweisende Einlass 28 eine Zuleitung 32 für ein Fluidisierungsmedium, wie beispielsweise Luft, auf.

Der Auslass 14 des Entleerrohrs 2 kann in einem weiteren Ausführungsbeispiel in die Wirbelschicht des Trocknungsapparates 29 hineinragen. Hierdurch wäre die Zuleitung 32 nicht vorhanden, das Granulat oder Extrudat würde dennoch direkt in die Wirbelschicht eingebracht und dort fluidisiert werden.Das Verfahren zur Entleerung der Vorrichtung 1 zur Herstellung von Granulaten oder Extrudaten wird an der in den Fign. 1 bis 6 erläuterten Vorrichtung 1 beschrieben.

In einem ersten Verfahrensschritt wird das Zwischenprodukt aus dem zugeführten zu behandelnden Material und der zugeführten Flüssigkeit im durch das Entleerrohr 2 verschlossenen Behälterinnenraum 21 des Behälters 3 hergestellt, wobei die Rühreinrichtung 5 zumindest zeitweise aktiv ist, also durch bspw. eine nicht gezeigte Antriebseinheit rotiert wird. So ist in dem Behälter 3 im ersten Verfahrensschritt ein Zwischenprodukt aus einem zu behandelnden Material und einer Flüssigkeit herstellbar, und das Zwischenprodukt anschließend in weiteren Verfahrensschritten über das sich in der Offen-Stellung befindende eine Fördereinrichtung 26 aufweisende Entleerrohr 2 aus der Vorrichtung 1 zu fördern und zu granulieren oder zu extrudieren.

Danach wird in einem zweiten Verfahrensschritt das Entleerrohr 2 aus der Schließ-Stellung gegenüber dem Behälter 3 in eine Offen-Stellung gegenüber dem Behälter 3 verbracht. Vorteilhafterweise wird das Entleerrohr 2 hierzu um einen Drehwinkel von 180° in oder entgegen dem Uhrzeigersinn gedreht. Andere Drehwinkel sind möglich und denkbar, um das Entleerrohr 2 aus der Schließ-Stellung in eine Offen-Stellung zu drehen. Das Drehen des Entleerrohrs 2 erfolgt entweder manuell oder automatisiert, bspw. durch eine Antriebseinheit wie einen Torque- oder Servomotor. Hierdurch überlagern sich die Auslassfläche 31 des Auslasses 10 des Behälters 3 und die Einlassfläche 30 des Einlasses 24 des Entleerrohrs 2 zumindest teilweise, sodass das Zwischenprodukt aus dem Behälter 3 in das Entleerrohr 2 transferierbar ist.

Anschließend wird im dritten Verfahrensschritt das Zwischenprodukt aus dem Behälter 3 und über die Fördereinrichtung 26 des Entleerrohrs 2 aus dem Auslass 14 des Entleerrohrs 2 gefördert. Das im Behälter 3 hergestellte Zwischenprodukt wird beim Entleervorgang durch die Rühreinrichtung 5 und/oder die Schwerkraft in das Entleerrohr 2 transportiert und dort durch die Fördereinrichtung 26 mit einem einstellbaren, bevorzugt konstanten Massenstrom aus der Vorrichtung 1 gefördert. Hierdurch bedingt sind bei der erfindungsgemäßen Vorrichtung 1 die Entleerzeiten in Abhängigkeit von den Produkteigenschaften genau definierbar oder definiert und exakt reproduzierbar.

Vorteilhafterweise wird hierzu vor dem zweiten Verfahrensschritt die Rühreinrichtung 5 in eine vorbestimmte Position verfahren. Die Rühreinrichtung 5 ist zum Beispiel mittels einer Antriebseinheit in die vorbestimmte Position verfahrbar. Die bspw. mit einer bestimmten Winkelgeschwindigkeit angetriebene Rühreinrichtung 5 kann in jeder Position im Behälter 3 gezielt angehalten werden. Auch ist es möglich die Rühreinrichtung 5 durch die teleskopierbare Antriebswelle 4 in ihrer Höhe anzuheben oder abzusenken. Dies ist für das Verbringen des Entleerrohrs 2 von einer Schließ-Stellung in eine Offen-Stellung und umgekehrt vorteilhaft, da dadurch die Rühreinrichtung 5 und/oder der Behälter 3 nicht beschädigt wird.

Die Vorrichtung 1 umfasst bevorzugt einen Trocknungsapparat 29 und das aus dem Auslass 14 des Entleerrohrs 2 gemäß dem dritten Verfahrensschritt austretende Extrudat oder Granulat wird in dem Trocknungsapparat 29 weiter behandelt, insbesondere getrocknet oder beschichtet. Bevorzugt weist hierbei der Einlass 28 des Trocknungsapparates 29 eine Zuleitung 32 für Fluide, insbesondere Gase, auf.

Durch das Einbringen eines Fluids, insbesondere eines Fluidisierungsgases, bevorzugt eines inerten Gases, über die Zuleitung 32 wird der Übertritt des aus dem Öffnungen 16 aufweisenden als Siebeinrichtung 15 ausgebildeten Auslass 14 des Entleerrohrs 2 austretenden Extrudats oder Granulats in den Trocknungsapparat 29, bevorzugt eine Wirbel- oder Strahlschichtapparat, gefördert bzw. unterstützt.

Besonders bevorzugt weist der Einlass 28 des Trocknungsapparates 29 einen Anströmboden auf oder ist zumindest teilweise als Anströmboden ausgebildet. Durch einen so gestalteten Einlass 28 des Trocknungsapparates 29 wird das aus dem Auslass 14 des Entleerrohrs 2 der Vorrichtung 1 austretende Extrudat oder Granulat direkt fluidisiert, ohne dass das Extrudat oder Granulat mit der Innenfläche 33 des Einlasses 28 des Trocknungsapparates 29 in Berührung kommt. Somit ergibt sich eine überdies verringerte produktberührte Oberfläche und folglich ein geringerer Produktverlust.

Des Weiteren umfasst die Vorrichtung 1 eine weitere Düse, insbesondere eine Reinigungsdüse, sodass die Vorrichtung 1 zumindest zeitweise während der Schließ-Stellung in einem weiteren Verfahrensschritt reinigbar ist. Es ist möglich die Vorrichtung 1, insbesondere den Innenraum des Entleerrohrs 2 während der Herstellung des Zwischenprodukts im Behälter 3 in der Schließ-Stellung von Produktresten zu befreien bzw. zu reinigen, sodass das Entleerrohr 2 bei der nächsten Entleerung des Behälters 3 sauber ist und die neue Charge frei von Verunreinigungen oder Rückständen der vorangegangenen Charge aus der Vorrichtung 1 transportierbar bzw. förderbar ist. Hierzu ist die nicht gezeigte Düse bevorzugt an einer Schiene angeordnet. Hierdurch kann die Düse optimal entlang des Einlasses 24 des Entleerrohrs 2 der Vorrichtung 1 positioniert werden, um jeden Winkel des Entleerrohrs 2 optimal zu reinigen. Ganz besonders bevorzugt ist die auf der Schiene angeordnete Düse in Längs- und Querrichtung zum Einlass 24 des Entleerrohrs 2 verschiebbar anordenbar oder angeordnet. Durch die Verschiebbarkeit der Düse insbesondere in Querrichtung zum Einlass 24, d. h. näher an den Einlass 24 heran, können Verunreinigungen oder Rückstände der vorangegangenen Charge verbessert entfernt und so das Entleerrohr 2 optimal gereinigt werden.

Gemäß einer vorteilhaften Ausgestaltung des erfindungsgemäßen Verfahrens ist die Vorrichtung 1 zur Durchführung des Verfahrens eine Vorrichtung 1 in den Fign. 1 bis 9 beschriebene Vorrichtung 1.

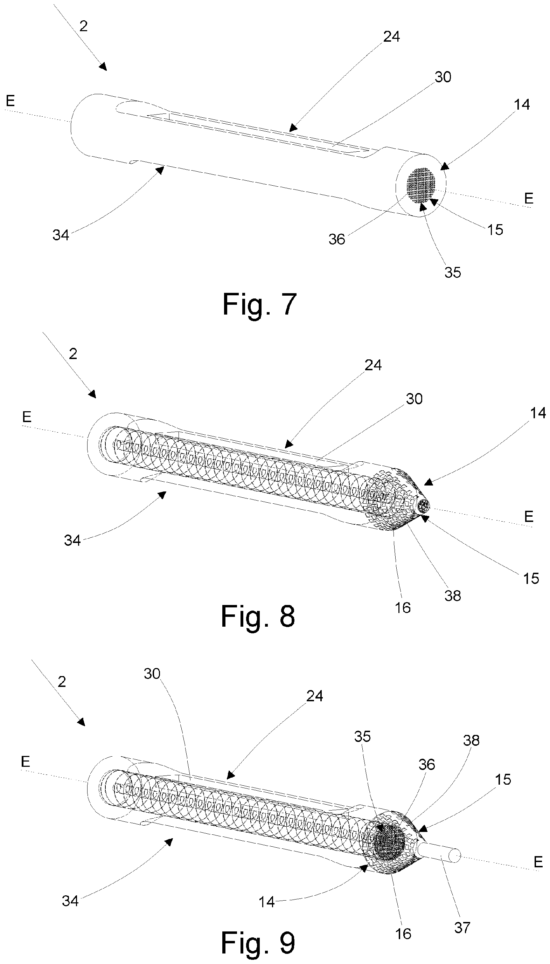

Fig. 7 stellt eine perspektivische Darstellung einer ersten Ausführungsform des Entleerrohrs 2 dar.

Das Entleerrohr 2 hat in einer ersten Ausführungsform eine größtenteils zylindrische Form. Das Entleerrohr 2 weist einen eine Einlassfläche 30 aufweisenden Einlass 24 auf, wobei der Einlass 24 in seiner Formgebung an den Boden 6 des Behälters 3 angepasst ist, sodass die Rührflügel 7 aufweisende Rühreinrichtung 5 in der Offen-Stellung drehbar ist. Hierdurch ist es möglich das Zwischenprodukt in der Offen-Stellung aus dem Behälterinnenraum 21 des Behälters 3 in das Entleerrohr 2 zu transferieren.

Zudem umfasst das Entleerrohr 2 eine in seiner Formgebung ebenfalls an den hier nicht gezeigten Boden 6 des Behälters angepasste Ausnehmung 34, sodass die Rührflügel 7 aufweisende Rühreinrichtung 5 in der Schließ-Stellung drehbar ist, um aus dem dem Behälter 3 zugeführten Material und der dem Behälter 3 zugeführten Flüssigkeit das Zwischenprodukt herstellen zu können, ohne das Zwischenprodukt in das Entleerrohr 2 zu fördern.

Das Entleerrohr 2 in einer ersten Ausführungsform gemäß Fig. 7 weist eine nicht sichtbare Fördereinrichtung 26 auf, die insbesondere als Förderschnecke, Spiralförderer oder dgl. ausgebildet ist und in Längsrichtung des Entleerrohrs 2 entlang der Mittelachse E-E fördert. Das Entleerrohr 2 weist eine größtenteils zylindrische Form auf. Das Entleerrohr 2 kann auch jede andere geometrische Form annehmen.

Die erste Ausführungsform des Entleerrohrs 2 weist einen Auslass 14 in Form einer als Lochblende 35 ausgebildten Siebeinrichtung 15 auf. Die Lochblende 35 der Siebeinrichtung 15 hat in der gezeigten Ausführungsform gleich große Öffnungen 36. Unterschiedlich große Öffnungen 36 in der Lochblende 35 der Siebeinrichtung 15 sind denkbar. Durch die gleich großen Öffnungen 36 der Lochblende 35 der Siebeinrichtung 15 in der ersten Ausführungsform des Entleerrohrs 2 ist eine enge Größenverteilung des austretenden Extrudats erreichbar, sodass gleiche bzw. ähnliche Partikel erzeugbar sind. Diese gleichen bzw. ähnlichen Partikel sind im Anschluss rondierbar, sodass gleichgroße Kügelchen, beispielsweise für eine Kapselbefüllung, entstehen.

In Fig. 8 ist eine perspektivische Darstellung einer zweiten Ausführungsform des Entleerrohrs 2 gezeigt, wobei die Darstellung eine im Inneren des Entleerrohrs 26 schematisch gezeigte Fördereinrichtung 26 zeigt.

Das Entleerrohr 2 hat in einer zweiten Ausführungsform eine größtenteils zylindrische Form. Das Entleerrohr 2 kann auch jede andere geometrische Form annehmen. Das Entleerrohr 2 weist einen eine Einlassfläche 30 aufweisenden Einlass 24 auf, wobei der Einlass 24 in seiner Formgebung an den hier nicht gezeigten Boden 6 des Behälters 3 angepasst ist, sodass die Rührflügel 7 aufweisende Rühreinrichtung 5 in der Offen-Stellung drehbar und das Zwischenprodukt in der Offen-Stellung aus dem Behälter 3 in das Entleerrohr 2 transferierbar ist.

Zudem umfasst das Entleerrohr 2 eine in seiner Formgebung ebenfalls an den Boden 6 des Behälters angepasste Ausnehmung 34, sodass die Rührflügel 7 aufweisende Rühreinrichtung 5 in der Schließ-Stellung drehbar ist, um aus dem dem Behälter 3 zugeführten Material und der dem Behälter 3 zugeführten Flüssigkeit das Zwischenprodukt herstellen zu können, ohne dass das zugeführte Material oder die zugeführte Flüssigkeit in das Entleerrohr 2 zu fördern.

Das Entleerrohr 2 in einer zweiten Ausführungsform gemäß Fig. 8 weist eine eine konstante Gangtiefe aufweisende und in Längsrichtung des Entleerrohrs 2 entlang der Mittelachse E-E in Richtung Auslass 14 fördernde Fördereinrichtung 26 auf, die insbesondere als Förderschnecke, Spiralförderer oder dgl. ausgebildet ist. Die Fördereinrichtung 26 und der nicht dargestellte Rotor sind vorzugsweise einstückig als Bauteileinheit des Entleerrohrs 2 ausgebildet.

In der zweiten Ausführungsform weist das Entleerrohr 2 einen Öffnungen 16 aufweisenden als Siebeinrichtung 15 ausgebildeten Auslass 14 auf. Das kegelförmig ausgebildete Sieb 38 der Siebeinrichtung 15 hat in der gezeigten Ausführungsform gleich große Öffnungen 16. Unterschiedlich große Öffnungen 16 im Sieb 38 der Siebeinrichtung 15 sind möglich. Durch das Sieb 38 der Siebeinrichtung 15 wird in der zweiten Ausführungsform des Entleerrohrs 2 eine breite Größenverteilung des Granulats insbesondere gemäß der Gauß'schen Verteilung erzielt. Die hergestellten Granulate weisen eine poröse, ungleichmäßige Struktur auf. Die in einer Vorrichtung 1 mit einem Entleerrohr 2 entsprechend Fig. 8 hergestellten Granulate mit einer breiten Größenverteilung eignen sich beispielsweise für eine Verpressung zu Tabletten.

Eine perspektivische Darstellung einer dritten Ausführungsform des Entleerrohrs 2 ist in Fig. 9 dargestellt, wobei die Darstellung eine schematisch gezeigte Fördereinrichtung 26 zeigt. Die Fördereinrichtung 26 und der nicht dargestellte Rotor sind im Ausführungsbeispiel mehrteilig als unterschiedliche Bauteileinheiten ausgebildet. Eine einteilige Bauteileinheit aus Fördereinrichtung 26 und Rotor ist, wie in Fig. 8 beschrieben, auch möglich.

Die dritte Ausführungsform des Entleerrohrs 2 gemäß Fig. 9 umfasst im Gegensatz zu der Fig. 8 gezeigten zweiten Ausführungsform am Auslass 14 eine gleich große Öffnungen 36 aufweisende Lochblende 35 sowie eine Welle 37 zum Antrieb eines hier nicht gezeigten Rotors, der die Granulate im Inneren an den Öffnungen 16 des Siebs 38 der Siebeinrichtung 15 abschert. Hierdurch sind Granulate mit einer engeren Größenverteilung herstellbar.

Alle in den Fign. 7 bis 9 dargestellten Merkmale des Entleerrohrs 2 sowie die weiteren in den Fign. 1 bis 6 gezeigten Merkmale des Entleerrohrs 2 sind in beliebiger Kombination ausführbar. Beispielsweise ist der nicht dargestellte Rotor der Siebeinrichtung 15 gemäß Fig. 9 auch mittels einer koaxial in einer als Hohlwelle ausgebildeten Welle 27 über eine ebenfalls nicht dargestellte Antriebseinheit antreibbar.

## Patentansprüche

1. Verfahren zur Entleerung einer Vorrichtung (1) zur Herstellung von Granulaten oder Extrudaten, wobei die Vorrichtung (1) einen Behälter (3) mit einem Einlass (8) für das zu behandelnde Material, mit einem Einlass (9) für eine Flüssigkeit, mit einer Rühreinrichtung (5) zur Herstellung eines Zwischenprodukts aus dem zu behandelnden Material und der Flüssigkeit und mit einem Auslass (10) für das Zwischenprodukt, und einem Entleerrohr (2) umfasst, **dadurch gekennzeichnet, dass** die Vorrichtung (1) ein einen Einlass (24) für das Zwischenprodukt und einen Auslass (14) für das Granulat oder Extrudat sowie eine das Zwischenprodukt vom Einlass (24) des Entleerrohrs (2) in Richtung des Auslasses (14) des Entleerrohrs (2) fördernde Fördereinrichtung (26) aufweisendes Entleerrohr (2) umfasst, wobei das um eine Achse E-E drehbare Entleerrohr (2) derart an dem Behälter (3) angeordnet ist, sodass das Entleerrohr (2) gegenüber dem Behälter (3) zwischen einer Offen-Stellung und einer Schließ-Stellung verbringbar ist umfassend die Schritte
a) Herstellen des Zwischenprodukts aus dem zu behandelnden Material und der Flüssigkeit im durch das Entleerrohr (2) verschlossenen Behälter (3), wobei die Rühreinrichtung (5) zumindest zeitweise aktiv ist,
b) Verbringen des Entleerrohrs (2) aus der Schließ-Stellung gegenüber dem Behälter (3) in eine Offen-Stellung gegenüber dem Behälter (3) und
c) Fördern des Zwischenprodukts aus dem Behälter (3) und über die Fördereinrichtung (26) des Entleerrohrs (2) aus dem Auslass (14) des Entleerrohrs (2).

2. Verfahren nach Anspruch 1, **dadurch gekennzeichnet, dass** vor Schritt b) die Rühreinrichtung (5) in eine vorbestimmte Position gebracht wird.

3. Verfahren nach Anspruch 2, **dadurch gekennzeichnet, dass** das die Rühreinrichtung (5) durch Anheben in eine vorbestimmte Position verfahren wird oder dass die Rührflügel (7) der Rühreinrichtung (5) in einem vorbestimmten Winkel im Behälter (3) angehalten werden.

4. Verfahren nach einem der vorhergehenden Ansprüche, **dadurch gekennzeichnet, dass** beim Verbringen des Entleerrohrs (2) aus der Schließ-Stellung gegenüber dem Behälter (3) in eine Offen-Stellung gegenüber dem Behälter (3) gemäß Schritt b) das Entleerrohr (2) um einen Winkel von 10° bis 300°, insbesondere im Wesentlichen um einen Winkel 180°, gedreht wird.

5. Verfahren nach einem der vorhergehenden Ansprüche, **dadurch gekennzeichnet, dass** beim Verbringen des Entleerrohrs (2) aus der Schließ-Stellung gegenüber dem Behälter (3) in eine Offen-Stellung gegenüber dem Behälter (3) gemäß Schritt b) das Entleerrohr (2) manuell oder automatisiert gedreht wird.

6. Verfahren nach einem der vorhergehenden Ansprüche, **dadurch gekennzeichnet, dass** die Vorrichtung (1) einen Fluidisierungsapparat (29) umfasst und das aus dem Auslass (14) des Entleerrohrs (2) gemäß Schritt c) austretende Extrudat oder Granulat in dem Fluidisierungsapparat (29) behandelt, insbesondere getrocknet, wird.

7. Verfahren nach einem der vorhergehenden Ansprüche, **dadurch gekennzeichnet, dass** die Vorrichtung (1) eine weitere Düse umfasst, wobei die Vorrichtung (1) zumindest zeitweise während der Schließ-Stellung gereinigt wird.

## Claims

1. Method for emptying a device (1) for producing granulates or extrudates, wherein the device (1) comprises a container (3) with an inlet (8) for the material to be processed, with an inlet (9) for a fluid, with an agitating device (5) for producing an intermediate product from the material to be processed and the fluid, and with an outlet (10) for the intermediate product and a discharge pipe (2), **characterised in that** the device (1) comprises an inlet (24) for the intermediate product and an outlet (14) for the granulate or extrudates as well as a conveying device (26) conveying the intermediate product from the inlet (24) of the discharge pipe (2) towards the outlet (14) of the discharge pipe (2), wherein the discharge pipe (2), which is rotatable about an axis E-E, is arranged at the container (3) in such a way that the discharge pipe (2) can be moved relative to the container (3) between an open position and a closed position, the method comprising the steps of:
a) producing the intermediate product from the material to be processed and the fluid in the container (3) closed by the discharge pipe (2), wherein the agitating device (5) is at least temporarily active,
b) moving the discharge pipe (2) from the closed position relative to the container (3) into an open position relative to the container (3), and
c) conveying the intermediate product out of the container (3) and, via the conveying device (26) of the discharge pipe (2), out of the outlet (14) of the discharge pipe (2).

2. Method according to claim 1, **characterised in that** the agitating device (5) is moved into a predetermined position before step b).

3. Method according to claim 2, **characterised in that** the agitating device (5) is moved into a predetermined position by raising, or **in that** the agitating blades (7) of the agitating device (5) are stopped at a predetermined angle in the container (3).

4. Method according to any of the preceding claims, **characterised in that**, when the discharge pipe (2) is moved from the closed position relative to the container (3) into an open position relative to the container (3) according to step b), the discharge pipe (2) is rotated about an angle of 10° to 100°, in particular substantially about an angle of 180°.

5. Method according to any of the preceding claims, **characterised in that**, when the discharge pipe (2) is moved from the closed position relative to the container (3) into an open position relative to the container (3) according to step b), the discharge pipe (2) is rotated manually or automatically.

6. Method according to any of the preceding claims, **characterised in that** the device (1) comprises a fluidisation apparatus (29), and **in that** the extrudates or granulate discharged from the outlet (14) of the discharge pipe (2) according to step c) is treated, in particular dried, in the fluidisation apparatus (29).

7. Method according to any of the preceding claims, **characterised in that** the device (1) comprises a further nozzle, wherein the device (1) is at least intermittently cleaned during the closed position.

## Revendications

1. Procédé pour le vidage d'un dispositif (1) pour la fabrication de granulés ou d'extrudats, dans lequel le dispositif (1) comprend un contenant (3) avec une entrée (8) pour le matériau à traiter, avec une entrée (9) pour un liquide, avec un système d'agitation (5) pour la fabrication d'un produit intermédiaire à partir du matériau à traiter et du liquide et avec une sortie (10) pour le produit intermédiaire, et un tube de vidage (2), **caractérisé en ce que** le dispositif (1) comprend un tube de vidage (2) présentant une entrée (24) pour le produit intermédiaire et une sortie (14) pour le granulé ou l'extrudat ainsi qu'un système de transport (26) transportant le produit intermédiaire à partir de l'entrée (24) du tube de vidage (2) en direction de la sortie (14) du tube de vidage (2), dans lequel le tube de vidage (2) pouvant tourner autour d'un axe E-E est disposé sur le contenant (3) de telle sorte que le tube de vidage (2) peut être amené par rapport au contenant (3) entre une position d'ouverture et une position de fermeture, comprenant les étapes
a) de fabrication du produit intermédiaire à partir du matériau à traiter et du liquide dans le contenant (3) fermé par le tube de vidage (2), dans lequel le système d'agitation (5) est actif au moins par intermittence,
b) d'amenée du tube de vidage (2) à partir de la position de fermeture par rapport au contenant (3) dans une position d'ouverture par rapport au contenant (3) et
c) de transport du produit intermédiaire à partir du contenant (3) et par l'intermédiaire du système de transport (26) du tube de vidage (2) hors de la sortie (14) du tube de vidage (2).

2. Procédé selon la revendication 1, **caractérisé en ce qu'**avant l'étape b) le système d'agitation (5) est amené dans une position prédéfinie.

3. Procédé selon la revendication 2, **caractérisé en ce que** le système d'agitation (5) est déplacé par soulèvement dans une position prédéfinie ou que les pales d'agitation (7) du système d'agitation (5) sont arrêtées dans le contenant (3) selon un angle prédéfini.

4. Procédé selon l'une quelconque des revendications précédentes, **caractérisé en ce que** lors de l'amenée du tube de vidage (2) à partir de la position de fermeture par rapport au contenant (3) dans une position d'ouverture par rapport au contenant (3) selon l'étape b) le tube de vidage (2) est amené en rotation d'un angle de 10° à 300°, en particulier sensiblement d'un angle de 180°.

5. Procédé selon l'une quelconque des revendications précédentes, **caractérisé en ce que** lors de l'amenée du tube de vidage (2) à partir de la position de fermeture par rapport au contenant (3) dans une position d'ouverture par rapport au contenant (3) selon l'étape b) le tube de vidage (2) est amené en rotation manuellement ou de manière automatisée.

6. Procédé selon l'une quelconque des revendications précédentes, **caractérisé en ce que** le dispositif (1) comprend un appareil de fluidisation (29) et l'extrudat ou le granulé sortant de la sortie (14) du tube de vidage (2) selon l'étape c) est traité dans l'appareil de fluidisation (29), en particulier séché.

7. Procédé selon l'une quelconque des revendications précédentes, **caractérisé en ce que** le dispositif (1) comprend une autre buse, dans lequel le dispositif (1) est nettoyé au moins par intermittence pendant la position de fermeture.
